# EUROPÄISCHE PATENTSCHRIFT

(11) **EP 3 227 097 B1**
(45) Veröffentlichungstag und Bekanntmachung des Hinweises auf die Patenterteilung: **15.01.2020**
(21) Anmeldenummer: 15762560.9
(22) Anmeldetag: 09.09.2015
(51) Int. Cl.: B29C 73/16

(54) **MITTEL ZUM PROVISORISCHEN ABDICHTEN VON AUFBLASBAREN ODER AUFPUMPBAREN GEGENSTÄNDEN UND VERFAHREN ZUM PROVISORISCHEN ABDICHTEN VON AUFBLASBAREN ODER AUFPUMPBAREN GEGENSTÄNDEN**
AGENT FOR PROVISIONALLY SEALING INFLATABLE OR PRESSURIZABLE OBJECTS AND METHOD FOR PROVISIONALLY SEALING INFLATABLE OR PRESSURIZABLE OBJECTS
AGENT POUR RÉALISER UNE ÉTANCHÉITÉ TEMPORAIRE AU NIVEAU D'OBJETS GONFLABLES PAR SOUFFLAGE OU POMPAGE ET PROCÉDÉ DE RÉALISATION D'UNE ÉTANCHÉITÉ TEMPORAIRE AU NIVEAU D'OBJETS GONFLABLES PAR SOUFFLAGE OU POMPAGE

(30) Priorität: 01.12.2014 DE 102014224491
(43) Veröffentlichungstag der Anmeldung: 11.10.2017
(73) Patentinhaber: Continental Reifen Deutschland GmbH, 30165 Hannover (DE)
(72) Erfinder: BIALACH, Philip Mathias, 30659 Hannover (DE)
(74) Vertreter: Preusser, Andrea
(86) Internationale Anmeldenummer: PCT/EP2015/070545
(87) Internationale Veröffentlichungsnummer: WO 2016/087066

(56) Entgegenhaltungen:
- EP-A1- 2 889 352
- WO-A1-2014/030622
- US-B2- 8 183 309

## Beschreibung

Die Erfindung betrifft ein Mittel zum provisorischen Abdichten von aufblasbaren oder aufpumpbaren Gegenständen, insbesondere von Fahrzeugluftreifen, enthaltend zumindest einen Kautschuklatex und zumindest zwei verschiedene Gefrierschutzmittel. Ferner betrifft die Erfindung ein Verfahren zum provisorischen Abdichten von aufblasbaren oder aufpumpbaren Gegenständen, insbesondere von Fahrzeugluftreifen.

Beim Überfahren von spitzen Gegenständen kann ein Fahrzeugluftreifen Schäden in Form von Rissen oder Löchern erleiden, die zum Luftdruckverlust im Reifen führen. Um solche Schäden zumindest provisorisch, d. h. für eine gewisse Zeitdauer bis der Fahrzeugluftreifen ausgetauscht werden kann, möglichst sicher abzudichten, sind Abdichtmittel bekannt, die nach dem Herausschrauben des Ventileinsatzes oder direkt über das Ventil in den Reifen z. B. mit Hilfe einer Vorrichtung mit Druckquelle und Abdichtmittel eingebracht werden.

Abdichtmittel, die Kautschuklatex und ein Gefrierschutzmittel enthalten, sind z. B. aus der DE 195 42 935 A1, der DE 197 53 630 A1, der DE 198 44 177 A1, der US 8,183,309 B2 und der US 4,501,825 bekannt. Als Gefrierschutzmittel werden in diesen Schriften Glykole, wie z. B. Ethylenglykol oder Propylenglykol, vorgeschlagen. Die DE 198 44 177 A1 offenbart auch den gleichzeitigen Einsatz zweier verschiedener flüssiger Diole, wie z. B. Ethylenglykol und Dipropylenglykol, als Gefrierschutzmittel in Abdichtmitteln. Die in diesen Dokumenten vorgeschlagenen Gefrierschutzmittel weisen eine Dichte von mehr als 1 g/cm³ auf.

In der WO 2008/034657 A1 wird ein Abdichtmittel offenbart, dessen Gefrierschutzmittel eine Dichte kleiner oder gleich 1 g/cm³ aufweist. Ein derartiges Abdichtmittel ermöglicht ein Abdichten auch bei tiefen Temperaturen und weist eine verbesserte Haltbarkeit auf.

Um das Phänomen des Aufrahmens bei Latex enthaltenden Abdichtmitteln zu unterdrücken, ist es aus der EP 1 291 159 B1 bekannt, 20 bis 40 Gew.-%, bezogen auf das Gesamtgewicht des Abdichtmittels, Propylenglykol an Stelle von Ethylenglykol einzusetzen.

Propylenglykol kann jedoch zu einer erhöhten Vorvernetzung des Latex führen, insbesondere bei erhöhter Temperatur, und dadurch die Fließfähigkeit und die Pumpfähigkeit des Abdichtmittels stark einschränken. Dieser Effekt verstärkt sich bei höherem Latexgehalt bzw. bei höherem Feststoffgehalt.

Der Erfindung liegt die Aufgabe zu Grunde, ein Mittel zum provisorischen Abdichten von aufblasbaren oder aufpumpbaren Gegenständen, insbesondere von Fahrzeugluftreifen, bereitzustellen, das eine optimierte Fließfähigkeit und Pumpfähigkeit sowie dabei geringere Herstellungskosten aufweist. Gleichzeitig soll es möglichst geringe Mengen an umweltschädlichen und gesundheitsgefährdenden Substanzen enthalten.

Gelöst wird diese Aufgabe erfindungsgemäß dadurch, dass das Mittel zum provisorischen Abdichten von aufblasbaren oder aufpumpbaren Gegenständen einen Gesamtfeststoffgehalt aus Kautschuklatex und Klebharz von 3 bis 30 Gew.-% aufweist und zwei verschiedene Gefrierschutzmittel ausgewählt sind aus der Gruppe bestehend aus 1,2-Propandiol und 1,3-Propandiol und 1,2-Butandiol und 1,3-Butandiol und Glycerol und Triethylenglykol und 0 bis 9 Gew.-% Ethylenglykol.

Der Einfachheit halber wird im Rahmen der vorliegenden Erfindung das "Mittel zum provisorischen Abdichten von aufblasbaren oder aufpumpbaren Gegenständen" auch als "Abdichtmittel" bezeichnet.

Durch die Kombination aus geringem Feststoffgehalt mit den oben genannten Gefrierschutzmitteln wird eine sehr gute Abdichtleistung erzielt und zwar bei geringeren Materialmengen und damit geringeren Material- und Herstellungskosten. Der enthaltene Kautschuklatex und das enthaltene Klebharz wirken in der genannten Kombination effizienter, sodass eine geringere Menge notwendig ist.

Ein wesentliches Merkmal, welches die genannten Gefrierschutzmittel gemeinsam haben ist die Eigenschaft Wasser sehr gut zu binden. Gleichzeitig sind die genannten Gefrierschutzmittel im Vergleich zu im Stand der Technik bekannten Gefrierschutzmitteln umweltfreundlicher und weniger gesundheitsschädlich.

Sämtliche Gewichtsangaben beziehen sich, wenn nicht anders angegeben, auf die Gesamtmenge an Abdichtmittel bzw. auf die Gesamtmenge an Mittel zum provisorischen Abdichten von aufblasbaren oder aufpumpbaren Gegenständen.

Bevorzugt enthält das erfindungsgemäße Abdichtmittel zudem zumindest ein Tensidgemisch. Das Tensidgemisch enthält bevorzugt wenigstens ein Tensid, welches auf den Latex abgestimmt ist bzw. diesen stabilisiert und wenigstens ein Tensid, welches das zumindest eine Gefrierschutzmittel stabilisiert. Durch das Tensidgemisch wird somit eine weitere Stabilisierung des Abdichtmittels erzielt. Zudem ist wenigstens ein Tensid ein Schaumbildner, sodass das Tensidgemisch bevorzugt eine erhöhte Schaumbildung nach dem Pumpen durch das Reifenventil verursacht, was zu einer erhöhten Feststoffkonzentration lokal auf der Reifenoberfläche führt. Dies fördert die Gelierung am Abdichtort und damit die Abdichtung.

Bevorzugt entspricht die längste Kettenlänge (größter Zahl an Kohlenstoffatomen, die linear aneinander geknüpft sind) der Tenside ungefähr der längsten Kettenlänge (größter Zahl an Kohlenstoffatomen, die linear aneinander geknüpft sind) des Gefrierschutzmittels bzw. des Latex entsprechen, wodurch sich eine entsprechende Kompatibilität zur Stabilisierung ergibt.

Bevorzugt enthält das Tensidgemisch eines oder mehrere tensidische Sulfonate, bevorzugt anionische Mono- oder Di-Sulfonate, und/oder eines oder mehrere Alkylarylethersulfate, wie z.B. Natriumtrialkylphenolpolyethylenglykolethersulfat und wenigstens ein sterisches Tensid.

Tensidische Sulfonate wie Mono- oder Di-Sulfonate sowie z.B.

Natriumtrialkylphenolpolyethylenglykolethersulfat sind gute Schaumbildner.

Bei den Sulfonaten sind Di-Sulfonate bevorzugt, da hiermit eine höhere Effizienz in Bezug auf die Stabilisierung erzielt wird.

Die sterischen Tenside werden wie oben beschrieben nach ihrer Kompatibilität zu dem oder den verwendeten Gefrierschutzmitteln ausgewählt, also bevorzugt aufgrund der Kettenlänge(n) ausgewählt. Bei den sterischen Tensiden kann es sich um alle dem Fachmann bekannten sterischen Tenside handeln, wie insbesondere Alkohol Ethoxylate und/oder Ethylenoxid-Propylenoxide Blockcopolymere.

Die sterischen Tenside haben bevorzugt eine Viskositäts- und Schaumregulierende Wirkung.

Die Menge an enthaltenen sterischen Tensiden beträgt 0 bis 3 Gew.-%. Gemäß einer bevorzugten Ausführungsform der Erfindung beträgt sie 0,1 bis 3 Gew.-%, besonders bevorzugt 1 bis 3 Gew.-%, ganz besonders bevorzugt 1,0 bis 2,5 Gew.-%.

Die Menge an enthaltenen tensidischen Sulfonaten, bevorzugt anionischen Mono- oder Di-Sulfonaten, beträgt 0 bis 3 Gew.-%. Gemäß einer bevorzugten Ausführungsform der Erfindung beträgt sie 0,1 bis 3 Gew.-%, besonders bevorzugt 1 bis 3 Gew.-%, ganz besonders bevorzugt 1,2 bis 2,5 Gew.-%.

Die Menge an enthaltenen Alkylarylethersulfate, bevorzugt Glykolethersulfaten, beträgt 0 bis 3 Gew.-%. Gemäß einer bevorzugten Ausführungsform der Erfindung beträgt sie 0,1 bis 3 Gew.-%, besonders bevorzugt 1 bis 3 Gew.-%, ganz besonders bevorzugt 1,2 bis 2,5 Gew.-%.

Gemäß einer besonders vorteilhaften Weiterbildung der Erfindung enthält das Abdichtmittel:
1,2 bis 2,5 Gew.-% tensidische Sulfonate, bevorzugt anionische Mono- oder Di-Sulfonate, besonders bevorzugt anionische Di-Sulfonate, und/oder
1,2 bis 2,5 Gew.-% Alkylarylethersulfate, bevorzugt Glykolethersulfate, und 1,0 bis 2,5 Gew.-% wenigstens eines sterischen Tensids.

Ein Abdichtmittel mit einem derartigen Tensidgemisch zeigt insbesondere bei der Verwendung in Fahrzeugluftreifen überraschend eine leichte Aerosolbildung beim Einsprühen durch das Ventil des abzudichtenden Gegenstandes. Das Dichtmittelaerosol bewegt sich während des Aufpumpvorgangs zur Einstichstelle, insbesondere eines Fahrzeugluftreifens, und beginnt das Loch abzudichten. Je größer die Leckage, desto größer ist der Effekt. Der Vorteil ist hierbei insbesondere darin zu sehen, dass sich die Leckage schon beim Aufpumpvorgang verkleinert und dadurch die Aufpumpzeit signifikant verkürzt.

Zudem wird bei optimaler Aerosolbildung eine sofortige Abdichtung der Leckage schon während des Aufpumpvorgangs erreicht.

Außerdem können somit auch leistungsschwache Kompressoren einen Reifen mit anfänglich großer Leckage auf den gewünschten Luftdruck aufpumpen.

Die Gesamtmenge an Gefrierschutzmittel im Abdichtmittel, d. h. alle Gefrierschutzmittel sind umfasst, beträgt gemäß einer bevorzugten Weiterbildung der Erfindung 1 bis 50 Gew.-%, besonders bevorzugt 10 bis 50 Gew.-%, ganz besonders bevorzugt 20 bis 50 Gew.-%. Insbesondere eine Gesamtmenge von 10 Gew.-% oder mehr an Gefrierschutzmittel sorgt bei kalten Umgebungstemperaturen bei der Anwendung, bevorzugt im Fahrzeugluftreifen, für einen ausreichenden Gefrierschutz. Bei wärmeren Umgebungstemperaturen sind jedoch auch Gesamtmengen an Gefrierschutzmittel von weniger als 10 Gew.-% denkbar.

Bevorzugt beträgt die Menge jedes einzelnen der genannten Gefrierschutzmittel außer Ethylenglykol jedoch bis zu 25 Gew.-%, also 0,1 bis 25 Gew.-%. Die Menge an Ethylenglykol beträgt erfindungsgemäß nur bis zu 9 Gew.-%, falls Ethylenglykol vorhanden ist.

Eine Menge von mehr als 25 Gew.-% von nur einem Gefrierschutzmittel führt dazu, dass unerwünschte Eigenschaften des jeweiligen Gefrierschutzmittels zu dominant und somit schlecht kompensierbar sind.

Falls 1,2-Propandiol als Gefrierschutzmittel enthalten ist beträgt die Menge bevorzugt 0,1 bis 25 Gew.-%, besonders bevorzugt 0,1 bis 19 Gew.-%.

Falls 1,3-Propandiol als Gefrierschutzmittel enthalten ist beträgt die Menge bevorzugt 0,1 bis 25 Gew.-%, besonders bevorzugt 0,1 bis 19 Gew.-%.

Falls 1,3-Butandiol als Gefrierschutzmittel enthalten ist beträgt die Menge bevorzugt 0,1 bis 25 Gew.-%.

Falls Glycerol (Propan-1,2,3-Triol) als Gefrierschutzmittel enthalten ist beträgt die Menge bevorzugt 0,1 bis 20 Gew.-%.

Zudem kann das Abdichtmittel erfindungsgemäß bis zu 9 Gew.-% 1,2-Ethandiol (1,2-Ethandiol ist eine andere Bezeichnung für Ethylenglykol) enthalten. Gemäß einer bevorzugten Ausführungsform der Erfindung enthält das Abdichtmittel jedoch 0 Gew.-% Ethylenglykol und ist damit frei von Ethylenglykol.

Der genannte Gesamtfeststoffgehalt aus Kautschuklatex und Klebharz von 3 bis 30 Gew.-% bezieht sich nur auf die Feststoffe aus dem oder den eingesetzten Latex bzw. Latices und dem oder den eingesetzten Klebharz(en) und wird anhand der Einwaagen der eingesetzten Materialien bestimmt.

Die sonstigen Feststoffanteile der im Abdichtmittel vorhandenen Substanzen, insbesondere der im Tensidgemisch vorhandenen, zählen nicht zu dem Gesamtfeststoffgehalt.

Der Gesamtfeststoffgehalt aus Kautschuklatex und Klebharz beträgt erfindungsgemäß 3 bis 30 Gew.-%. Bevorzugt beträgt der Gesamtfeststoffgehalt aus Kautschuklatex und Klebharz 8 bis 30 Gew.-%, besonders bevorzugt 14 bis 20 Gew.-%.

Das erfindungsgemäße Mittel zum provisorischen Abdichten von aufblasbaren oder aufpumpbaren Gegenständen enthält zumindest einen Kautschuklatex. Bei dem Kautschuklatex kann es sich um Naturkautschuklatex aus *Hevea brasiliensis* oder auch um Latex aus dem Guayulestrauch (*Parthenium argentatum*) handeln. Der Naturkautschuklatex kann auch in deproteinierter Form eingesetzt werden. Es kann als Latex aber auch ein Latex aus synthetischen Kautschuken verwendet werden. Der Einsatz verschiedener Latices im Verschnitt ist ebenfalls möglich.

Gemäß einer vorteilhaften Weiterbildung der Erfindung weist der oder die für das Abdichtmittel verwendete Latex(tices) einen Feststoffanteil von 40 bis 75 Gew.-%, bevorzugt 55 bis 65 Gew.-%, besonders bevorzugt 60 Gew.-%, aufweist bzw. aufweisen und bei der Herstellung des Mittels in einer Menge von 2 bis 35 Gew.-%, bezogen auf das Gesamtgewicht des Mittels zum Abdichten, eingesetzt wird bzw. werden. Diese Latices lassen sich gut zum Abdichtmittel verarbeiten und gewährleisten in den angegebenen Mengen eine gute Pump- und Einspritzbarkeit des Abdichtmittels in den abzudichtenden Gegenstand bei gleichzeitig guter Dichtwirkung.

Zur Verbesserung der Abdichtwirkung und der Haltbarkeit enthält das Abdichtmittel zumindest ein Klebharz.

Es können auch mehrere Klebharze im Gemisch verwendet werden, wobei die Harze bevorzugt als eine 45 bis 60 Gew.-%ige, bevorzugt 45 bis 55 Gew.-%ige, besonders bevorzugt 50 Gew.-%ige, wässrige Dispersion (Emulsion) in einer Menge von 2 bis 20 Gew.-%, bevorzugt 2 bis 16 Gew.-%, bezogen auf das Gesamtgewicht des Mittels zum Abdichten, eingesetzt werden. Als Klebharze können natürliche oder synthetische Harze, wie Kohlenwasserstoffharze, eingesetzt werden, die als Klebrigmacher wirken. Bevorzugt sind die Klebharze ausgewählt aus der Gruppe bestehend aus Kolophoniumharzen und deren Estern, Terpen-Phenol-Harzen, Alkin-Phenol-Harzen, Phenol-Harzen und Cumaron-Inden-Harzen. Abdichtmittel mit diesen Klebharzen zeigen eine besonders hohe Klebfestigkeit mit guter Abdichtwirkung und haben einen positiven Einfluss auf die Kompatibilisierung mit anderen Komponenten des Abdichtmittels.

Das Kolophonium, das aus dem Baumharz verschiedener Nadelhölzer gewonnen werden kann, besteht im Wesentlichen aus einem Gemisch aus Harzsäuren und Terpenen. Die Veresterung der entsprechenden Bestandteile des Kolophoniums erfolgt auf herkömmliche Art und Weise. So ist es denkbar, das Kolophonium z. B. mit Alkoholen bzw. Alkoholgemischen umzusetzen. Auch ist es möglich, dass aus dem Kolophonium gewisse Bestandteile, wie z. B. die Abietinsäure, Dehydroabietinsäure, Tetrahydroabietinsäure, Dihydroabietinsäure, deren Isomere und/oder Mischungen hieraus, gewonnen werden und diese Bestandteile einzeln oder gemeinsam mit Alkoholen oder Alkoholgemischen umgesetzt werden. Bevorzugt werden als Alkohole z. B. Methanol, Ethanol, Propan-1,2,3-triol und/oder Pentaerithrithol verwendet.

Terpen-Phenol-Harze sind solche Harze, die durch Säure-katalysierte Addition von Phenolen an Terpene hergestellt werden.

Als Alkin-Phenol-Harz können Harze verwendet werden, die als Alkin z. B. Ethin und als Phenolkomponente z. B. Butylphenol oder Novolacke aus Formaldehyd und z. B. p-tert. Butylphenol (oder p-Diisobutylphenol) enthalten.

Cumaron-Inden-Harze fallen als Copolymere bei der Polymerisation der im Leichtöl des Steinkohlenteers enthaltenen ungesättigten Verbindungen an.

Ferner kann das Abdichtmittel zusätzlich zu den im Latex und Klebharz enthaltenen Flüssigkeiten eines oder mehrere Lösungsmittel in Mengen bis zu 40 Gew.-% enthalten. Gemäß einer bevorzugten Ausführungsform der Erfindung beträgt die Menge an zusätzlichen Lösungsmitteln 10 bis 40 Gew.-%, besonders bevorzugt 10 bis 30 Gew.-%, ganz besonders bevorzugt 18 bis 28 Gew.-%.

Bei dem oder den Lösungsmittel(n) kann es sich um protische, nicht saure Lösungsmittel handeln, wie insbesondere Wasser und/oder Alkohole, wobei Wasser bevorzugt ist.

Das Abdichtmittel kann weitere übliche Zusatzstoffe in üblichen Mengen enthalten. So können dem Abdichtmittel Alterungsschutz- bzw. Konservierungsmittel zur Sicherung der Einsatzbereitschaft des Abdichtmittels bei Lagerung zugesetzt werden. Ferner kann das Abdichtmittel Dispergiermittel, Emulgiermittel und pH-Regulatoren enthalten.

Bevorzugt enthält das Abdichtmittel 1 bis 2 Gew-% wenigstens eines Alterungsschutzmittels, wie insbesondere Dispersionen von sterisch gehinderten und alkylierten (Poly)-Phenolen und/oder alkylierte Diphenylamine.

Es ist auch möglich, dem Abdichtmittel Füllstoffe zuzusetzen, die zum Abdichten insbesondere von größeren Löchern beitragen. Als Füllstoffe können z. B. faserige Materialien (Natur- oder Synthesefasern), Schichtsilikate, Kieselsäure, Talk, Kreide, Ruß, Gummimehl oder Ähnliches eingesetzt werden.

Die Herstellung des erfindungsgemäßen Abdichtmittels kann z. B. in der Art erfolgen, dass in einem Rührkessel zunächst der Latex vorgelegt wird und eine Klebharzdispersion zugemischt wird. Nach Zudosierung eventueller anderer Bestandteile, wie Dispergiermittel, Emulgiermittel, Schaumstabilisatoren, Tenside, pH-Regulatoren und Füllstoffe, wird im letzten Schritt das Gefrierschutzmittel, ggf. in Wasser verdünnter Form, dem Latex unter Rühren zugegeben.

Das Abdichtmittel weist bevorzugt eine Viskosität (dynamische Viskosität nach Brookfield; Spindel 1, 60 U/min) bei 23 °C von 10 bis 30 mPa·s auf.

Das Abdichtmittel kann zum Abdichten von aufblasbaren oder aufpumpbaren Gegenständen, wie z. B. Bällen, eingesetzt werden. Besonders bevorzugt ist allerdings der Einsatz des Abdichtmittels zum nachträglichen Abdichten von Fahrzeugluftreifen, wobei es im Schadensfall durch das Ventil des Fahrzeugluftreifen über aus dem Stand der Technik bekannte Vorrichtungen (s. z. B. WO 02066236 A1) in das Reifeninnere befördert wird. Bevorzugt handelt es sich bei dem Fahrzeugluftreifen um einen schlauchlosen Fahrzeugluftreifen.

Weiterhin betrifft die Erfindung ein Verfahren zum provisorischen Abdichten von aufblasbaren oder aufpumpbaren Gegenständen unter Verwendung des oben beschriebenen Mittels inklusiver aller bevorzugten Ausführungsformen und Weiterbildungen.

Die Erfindung betrifft bevorzugt ein Verfahren zum provisorischen Abdichten von Fahrzeugluftreifen.

Bevorzugt wird das Mittel bei dem Verfahren durch das Ventil des abzudichtenden aufblasbaren oder aufpumpbaren Gegenstandes, bevorzugt des Fahrzeugluftreifens, eingesprüht.

Dieses Verfahren hat in Kombination mit dem erfindungsgemäßen Mittel den Vorteil, dass eine überraschend leichte Aerosolbildung beim Einsprühen erfolgt. Das Dichtmittelaerosol bewegt sich während des Aufpumpvorgangs zur Einstichstelle, insbesondere eines Fahrzeugluftreifens, und beginnt das Loch abzudichten. Je größer die Leckage, desto größer ist der Effekt. Der Vorteil ist hierbei insbesondere darin zu sehen, dass sich die Leckage schon beim Aufpumpvorgang verkleinert und dadurch die Aufpumpzeit signifikant verkürzt. Zudem wird bei optimaler Aerosolbildung eine sofortige Abdichtung der Leckage schon während des Aufpumpvorgangs erreicht.

Außerdem können somit auch leistungsschwache Kompressoren einen Reifen mit anfänglich großer Leckage auf den gewünschten Luftdruck aufpumpen.

Besonders bevorzugt enthält das Mittel hierzu 1,2 bis 2,5 Gew.-% tensidische Sulfonate, bevorzugt anionische Mono- oder Di-Sulfonate, besonders bevorzugt anionische Di-Sulfonate, und/oder
1,2 bis 2,5 Gew.-% Alkylarylethersulfate, bevorzugt Glykolethersulfate, und
1,0 bis 2,5 Gew.-% wenigstens eines sterischen Tensids.

Insbesondere mit einem derartigen Tensidgemisch wird der Vorteil der Verkleinerung oder sogar Abdichtung der Leckage schon während des Aufpumpvorgangs erreicht.

Anhand der folgenden Ausführungsbeispiele soll die Erfindung näher erläutert werden. Abdichtmittel aus dem Stand der Technik sind als Vergleichsbeispiele mit "V" gekennzeichnet. Erfindungsgemäße Zusammensetzungen sind mit "E" gekennzeichnet. Von den jeweiligen Abdichtmitteln wurde die Viskosität nach Brookfield bestimmt. Ferner wurde die Abdichtwirkung als maximale Leckagerate bestimmt. Die Leckage wird mithilfe eines 6mm Nagels bei Temperaturen von -40°C bis +70°C gesetzt und der Druckverlust, ausgehend von 2,5 bar Reifenfülldruck gemessen. Die Zusammensetzungen und Ergebnisse sind in Tabelle 1 zusammengefasst.

### Verwendete Substanzen

^{a)} 60 Gew.-% Feststoffgehalt, LATZ Naturlatex, z.B. Weber & Schaer
^{b)} Kolophoniumester, 50 Gew.-% Feststoffgehalt, Tacolyn, Eastman Chemical Company
^{c)} Aromatisch modifiziertes Terpenharz, Nanolet TO, Yasuhara chemical Co. Ltd
^{d)} alkyliertes (Poly)-Phenol
^{e)} anionisches Disulfonat, 30 Gew.-% aktiver Feststoffgehalt
^{f)} Natriumtrialkylphenolpolyethylenglykolethersulfat
^{g)} Polyoxyethylen(25)cetylstearylether
^{h)} Lösungsmittel Wasser
ⁱ⁾ Feststoffgehalt aus Kautschuklatex und Klebharzen (a) bis c))

**Tabelle 1**

| **Bestandteile** | **Einheit** | **V1** | **V2** | **E1** | **E2** | **E3** | **E4** |
|---|---|---|---|---|---|---|---|
| Naturkautschuklatex ^{a)} | Gew.-% | 60 | 60 | 25 | 25 | 15 | 25 |
| Klebharz ^{b)} | Gew.-% | - | 20 | 9 | 8 | 6 | 8 |
| Klebharz ^{c)} | Gew.-% | 20 | - | - | - | - | - |
| Alterungsschutzmittel ^{d)} | Gew.-% | - | 1 | 1 | 1 | 1 | 1 |
| Tensid ^{e)} | Gew.-% | - | 1 | 2 | - | 2 | 2 |
| Tensid ^{f)} | Gew.-% | - | - | 2 | 2 | 2 | 2 |
| Sterischer Stabilisator ^{g)} | Gew.-% | - | - | 1 | 2 | - | 2 |
| 1,2-Ethandiol | Gew.-% | 20 | 16 | 9 | 9 | 9 | - |
| 1,2-Propandiol | Gew.-% | - | - | 19 | 19 | 14 | 19 |
| 1,3-Propandiol | Gew.-% | - | - | - | - | 5 | - |
| 1,3-Butandiol | Gew.-% | - | - | 12 | 10 | 10 | 20 |
| Glycerol | Gew.-% | - | - | - | 4 | 10 | - |
| Lösungsmittel ^{h)} | Gew.-% | - | - | 20 | 20 | 26 | 21 |
| Feststoffgehalt ⁱ⁾ | Gew.-% | 45 | 45 | 20 | 20 | 12 | 20 |

| **Eigenschaften** | | | | | | | |
|---|---|---|---|---|---|---|---|
| Viskosität b. 23 °C | mPa·s | 35 | 30 | 16 | 18 | 25 | 20 |
| Max. Leckagerate | bar/min | 1 | 1,4 | 2 | 2 | 2 | 2 |

Mit den erfindungsgemäßen Abdichtmitteln E1 bis E4 können Fahrzeugluftreifen nach Schäden sicher abgedichtet werden. Wie in Tabelle 1 erkennbar weisen die erfindungsgemäßen Abdichtmittel eine vergleichsweise geringe Viskosität auf, wodurch sich ein optimales Fließverhalten bei der Anwendung, bevorzugt im Fahrzeugluftreifen, und eine optimale Pumpfähigkeit ergibt.

Zusätzlich weist das Abdichtmittel im Vergleich zu Abdichtmitteln mit einer größeren Menge an Ethylenglykol kein bzw. ein verringertes Gefahrstoffpotenzial nach EG-Norm auf (EG Nr. 1272/2008).

## Patentansprüche

1. Mittel zum provisorischen Abdichten von aufblasbaren oder aufpumpbaren Gegenständen, insbesondere von Fahrzeugluftreifen, enthaltend zumindest einen Kautschuklatex, zumindest ein Klebharz und zumindest zwei verschiedene Gefrierschutzmittel, wobei es einen Gesamtfeststoffgehalt aus Kautschuklatex und Klebharz von 3 bis 30 Gew.-% aufweist und die Gefrierschutzmittel ausgewählt sind aus der Gruppe bestehend aus 1,2-Propandiol und 1,3-Propandiol und 1,2-Butandiol und 1,3-Butandiol und Glycerol und Triethylenglykol und 0 bis 9 Gew.-% Ethylenglykol.

2. Mittel nach Anspruch 1, **dadurch gekennzeichnet, dass** es zumindest ein Tensidgemisch enthält.

3. Mittel nach Anspruch 2, **dadurch gekennzeichnet, dass** das Tensidgemisch eines oder mehrere tensidische Sulfonate und/oder eines oder mehrere Alkylarylethersulfate und wenigstens ein sterisches Tensid enthält.

4. Mittel nach Anspruch 3, **dadurch gekennzeichnet, dass** es 1,2 bis 2,5 Gew.-% tensidische Sulfonate und/oder 1,2 bis 2,5 Gew.-% Alkylarylethersulfate und 1,0 bis 2,5 Gew.-% wenigstens eines sterischen Tensids enthält.

5. Mittel nach einem der vorherigen Ansprüche, **dadurch gekennzeichnet, dass** die Menge jedes einzelnen der genannten Gefrierschutzmittel außer Ethylenglykol 0,1 bis 25 Gew.-% bezogen auf das Gesamtgewicht des Mittels zum Abdichten beträgt.

6. Mittel nach einem der vorherigen Ansprüche, **dadurch gekennzeichnet, dass** der Kautschuklatex oder die Kautschuklatices einen Feststoffanteil von 40 bis 75 Gew.-% aufweist bzw. aufweisen und bei der Herstellung des Mittels in einer Menge von 3 bis 35 Gew.-%, bezogen auf das Gesamtgewicht des Mittels zum Abdichten, eingesetzt wird bzw. werden.

7. Mittel nach einem der vorherigen Ansprüche, **dadurch gekennzeichnet, dass** das oder die Klebharz(e) bei der Herstellung des Mittels als 45 bis 60 Gew.-%ige, wässrige Dispersion in einer Menge von 2 bis 20 Gew.-%, bezogen auf das Gesamtgewicht des Mittels zum Abdichten, eingesetzt wird bzw. werden.

8. Mittel nach einem der vorherigen Ansprüche, **dadurch gekennzeichnet, dass** das oder die Klebharz(e) ausgewählt ist bzw. sind aus der Gruppe, bestehend aus Kolophoniumharzen und deren Estern, Terpen-Phenol-Harzen, Alkin-Phenol-Harzen, Phenol-Harzen und Cumaron-Inden-Harzen.

9. Verfahren zum provisorischen Abdichten von aufblasbaren oder aufpumpbaren Gegenständen, insbesondere Fahrzeugluftreifen, unter Verwendung wenigstens eines Mittels gemäß einem der Ansprüche 1 bis 8.

10. Verfahren nach Anspruch 9, **dadurch gekennzeichnet, dass** das Mittel durch das Ventil eingesprüht wird.

## Claims

1. Composition for temporary sealing of articles inflatable by blowing or pumping, especially of motor vehicle pneumatic tires, comprising at least one rubber latex, at least one tackifying resin and at least two different antifreezes, it has a total solids content of rubber latex and tackifying resin of 3% to 30% by weight and the antifreezes are selected from the group consisting of propane-1,2-diol and propane-1,3-diol and butane-1,2-diol and butane-1,3-diol and glycerol and triethylene glycol and 0% to 9% by weight of ethylene glycol.

2. Composition according to Claim 1, **characterized in that** it comprises at least one surfactant mixture.

3. Composition according to Claim 2, **characterized in that** the surfactant mixture comprises one or more sulfonate surfactants and/or one or more alkylaryl ether sulfates and at least one steric surfactant.

4. Composition according to Claim 3, **characterized in that** it contains 1.2% to 2.5% by weight of sulfonate surfactants and/or 1.2% to 2.5% by weight of alkylaryl ether sulfates and 1.0% to 2.5% by weight of at least one steric surfactant.

5. Composition according to any of the preceding claims, **characterized in that** the amount of each individual antifreeze mentioned, apart from ethylene glycol, is 0.1% to 25% by weight, based on the total weight of the composition for sealing.

6. Composition according to any of the preceding claims, **characterized in that** the rubber latex or the rubber latices has/have a solids content of 40% to 75% by weight and is/are used in the production of the composition in an amount of 3% to 35% by weight, based on the total weight of the composition for sealing.

7. Composition according to any of the preceding claims, **characterized in that** the tackifying resin(s) is/are used in the production of the composition in the form of a 45% to 60% by weight aqueous dispersion in an amount of 2% to 20% by weight, based on the total weight of the composition for sealing.

8. Composition according to any of the preceding claims, **characterized in that** the tackifying resin(s) is/are selected from the group consisting of rosins and esters thereof, terpene-phenol resins, alkyne-phenol resins, phenolic resins and coumarone-indene resins.

9. Method of temporary sealing of articles inflatable by blowing or pumping, especially motor vehicle pneumatic tires, using at least one composition according to any of Claims 1 to 8.

10. Method according to Claim 9, **characterized in that** the composition is sprayed in through the valve.

## Revendications

1. Agent pour l'étanchéification provisoire d'articles gonflables par soufflage ou pompage, notamment de pneus de véhicules, contenant au moins un latex de caoutchouc, au moins une résine adhésive et au moins deux agents antigels différents, celui-ci présentant une teneur en solides totale issue du latex de caoutchouc et de la résine adhésive de 3 à 30 % en poids, et les agents antigels étant choisis dans le groupe constitué par le 1,2-propanediol et le 1,3-propanediol et le 1,2-butanediol et le 1,3-butanediol et le glycérol et le triéthylène glycol et 0 à 9 % en poids d'éthylène glycol.

2. Agent selon la revendication 1, **caractérisé en ce qu'**il contient au moins un mélange de tensioactifs.

3. Agent selon la revendication 2, **caractérisé en ce que** le mélange de tensioactifs contient un ou plusieurs sulfonates tensioactifs et/ou un ou plusieurs alkylaryléther-sulfates et au moins un tensioactif stérique.

4. Agent selon la revendication 3, **caractérisé en ce qu'**il contient 1,2 à 2,5 % en poids de sulfonates tensioactifs et/ou 1,2 à 2,5 % en poids d'alkylaryléther-sulfates et 1,0 à 2,5 % en poids d'au moins un tensioactif stérique.

5. Agent selon l'une quelconque des revendications précédentes, **caractérisé en ce que** la quantité de chaque agent antigel cité individuel à l'exception de l'éthylène glycol est de 0,1 à 25 % en poids, par rapport au poids total de l'agent pour l'étanchéification.

6. Agent selon l'une quelconque des revendications précédentes, **caractérisé en ce que** le latex de caoutchouc ou les latex de caoutchouc présentent une teneur en solides de 40 à 75 % en poids, et sont utilisés en une quantité de 3 à 35 % en poids, par rapport au poids total de l'agent pour l'étanchéification, lors de la fabrication de l'agent.

7. Agent selon l'une quelconque des revendications précédentes, **caractérisé en ce que** la ou les résines adhésives sont utilisées lors de la fabrication de l'agent sous la forme d'une dispersion aqueuse de 45 à 60 % en poids en une quantité de 2 à 20 % en poids, par rapport au poids total de l'agent pour l'étanchéification.

8. Agent selon l'une quelconque des revendications précédentes, **caractérisé en ce que** la ou les résines adhésives sont choisies dans le groupe constitué par les résines de colophane et leurs esters, les résines de terpène-phénol, les résines d'alcyne-phénol, les résines de phénol et les résines de coumarone-indène.

9. Procédé d'étanchéification provisoire d'articles gonflables par soufflage ou pompage, notamment de pneus de véhicules, utilisant au moins un agent selon l'une quelconque des revendications 1 à 8.

10. Procédé selon la revendication 9, **caractérisé en ce que** l'agent est injecté au travers de la valve.
